# FASCICULE DE BREVET EUROPEEN

(11) **EP 0 519 051 B1**
(45) Date de publication et mention de la délivrance du brevet: **27.03.1996**
(21) Numéro de dépôt: 92903483.3
(22) Date de dépôt: 24.12.1991
(51) Int. Cl.: G01V 1/18

(54) **CAPTEUR DE VIBRATIONS SUIVANT DEUX DIRECTIONS ORTHOGONALES**
SENSOR FÜR SCHWINGUNGEN IN ZWEI ORTHOGONALEN RICHTUNGEN
SENSOR FOR DETECTING VIBRATION IN TWO ORTHOGONAL DIRECTIONS

(30) Priorité: 04.01.1991 FR 9100100
(43) Date de publication de la demande: 23.12.1992
(73) Titulaire: INSTITUT FRANCAIS DU PETROLE, F-92502 Rueil-Malmaison (FR)
(72) Inventeur: CZERNICHOW, Jean, F-92290 Chatenay-Malabry (FR); LAURENT, Jean 9, rue du Moulle, F-78630 Orgeval (FR)
(86) Numéro de dépôt international: FR9101066
(87) Numéro de publication internationale: WO9212441

(56) Documents cités:
- FR-A- 1 127 760
- FR-A- 1 391 649
- FR-A- 1 598 454
- GB-A- 923 299
- US-A- 1 923 088
- US-A- 3 309 915
- US-A- 3 602 490
- US-A- 4 282 484

## Description

La présente invention concerne un capteur de vibrations adapté à détecter des vibrations dans un plan. Un tel capteur peut convenir pour des applications industrielles très diverses telles que par exemple des tests sur des machines ou éléments de machines soumis à des vibrations, pour des mesures sur des tables vibrantes etc.

Un tel capteur peut aussi être employé pour des applications en géophysique et notamment dans des puits pour mesurer les mouvements auxquelles sont soumises les parois d'un puits en réponse à des ondes acoustiques ou sismiques émises sur commande par une source vibrante ou impulsionnelle, et réfléchies par différentes discontinuités du sous-sol.

La détection des mouvements du sol est réalisée au moyen de capteurs comportant généralement une masse d'inertie suspendue élastiquement par rapport à un support rigide et des moyens de détection pour mesurer les déplacements relatifs de la masse d'inertie par rapport au support. Ces moyens de détection sont par exemple du type électro-dynamique avec un ou plusieurs bobinages fixés à la masse d'inertie et qui oscillent avec elle dans le champ magnétique créé par des aimants permanents ou des électro-aimants. La masse d'inertie est généralement suspendue au support rigide par des ressorts. Un tel agencement convient pour la détection de mouvements suivant une direction d'oscillation principale.

L'analyse du spectre de fréquence d'un tel capteur fait apparaître des irrégularités dans sa courbe de réponse avec des pics aux fréquences de résonance principale et secondaires de la suspension élastique, qui peuvent se retrouver dans la bande de fréquence mesurée par les capteurs.

Des capteurs sont décrits par exemple dans les brevets français No. 2 062 521, 1 598 454, 1 391 649, 1 127 760 etc.

Des exemples de l'art antérieur dans le domaine des capteurs de vibrations sont décrits par exemple dans les documents suivants.

Par le brevet US 1 923 088, on connaît un détecteur sismique de vibrations comportant un boîtier qui se termine en point et peut être enfoncé dans la terre, une tige flexible solidaire du boîtier à sa pointe, et des moyens électro-magnétiques de détection des mouvements de l'extrémité libre de la tige.

Par le brevet US 4 282 484, on connaît un détecteur à la fois sismique et magnétique à axe vertical comportant une tige verticale sur laquelle est fixée un aimant et un bobinage plat, et un autre bobinage monté coulissant le long de la tige, qui flotte par l'effet d'une répulsion magnétique.

Par le brevet US 3 309 915, on connaît un sismomètre qui, dans un de ses modes de réalisation, comporte une tige associée à un plateau, au centre d'une enceinte isolante contenant un liquide sensible au cisaillement où l'on fait passer un courant électrique. On note les variations de l'intensité qui le traverse résultant des mouvements ou vibrations du plateau dans l'enceinte.

Par le brevet GB 923 299, on connaît un capteur de vibrations comportant, dans un corps non magnétique, un aimant flottant tenu à distance de deux aimants permanents opposés et un bobinage solidaire du corps, disposé en son centre. Les vibrations déplacent le bobinage relativement à l'aimant flottant et créent des signaux.

Le capteur de vibrations selon l'invention comporte un boîtier, une tige rigide pourvue d'une première extrémité en appui sur le boîtier et qui peut pivoter par rapport à lui autour de cette première extrémité, et d'une partie libre. Il est caractérisé en ce qu'il comporte des moyens magnétiques pour exercer des forces de rappel sur la tige et la ramener dans une position neutre par rapport au corps par et des moyens associés au corps et la tige pour détecter les mouvements dans un plan de la partie libre de la tige relativement au corps, en réponse à des vibrations appliquées au capteur.

Suivant un mode de réalisation, les moyens pour exercer des forces de rappel sur la tige comportent des éléments de suspension magnétique, comprenant par exemple un premier aimant pourvu d'un évidement central qui est traversé par la tige, celle-ci étant solidaire d'un deuxième aimant, les deux aimants étant choisis de façon à exercer l'un sur l'autre des forces répulsives.

Le capteur de vibrations selon l'invention peut comporter des moyens magnétiques pour maintenir la première extrémité de la tige en appui contre le corps.

Il peut aussi comporter une liaison flexible pour maintenir la première extrémité de la tige au contact avec le corps ou bien encore une rotule pour maintenir la première extrémité de la tige en contact avec le corps.

Les éléments de détection peuvent être notamment du type électro-dynamique et comporter au moins un bobinage en position fixe par rapport au corps et coopérant avec ledit deuxième aimant.

Les éléments de détection électro-dynamiques peuvent comporter aussi un deuxième bobinage disposé perpendiculairement au premier, les axes des deux bobinages étant dans un plan sensiblement orthogonal à l'axe de la tige.

Le capteur de vibrations selon l'invention peut comporter encore des éléments de détection du type optique. Ces éléments de type optique peuvent être adaptés à mesurer les variations de trajets optiques résultant des déplacements de cette même partie libre.

Les moyens magnétiques de maintien comportent par exemple un troisième aimant solidaire de la tige et un quatrième aimant solidaire du corps, le troisième et le quatrième aimant étant choisis et disposés de manière à exercer l'un sur l'autre une force attractive sensiblement dirigée suivant l'axe de la tige.

La liaison flexible qui peut être utilisée pour maintenir la première extrémité de la tige au contact avec le corps comporte par exemple un prolongement aminci de la tige.

Chaque bobinage est enroulé autour d'une plaque par exemple, le corps comportant un support pour ladite plaque.

Suivant un mode de réalisation, ledit deuxième aimant est disposé entre l'emplacement du premier aimant et chaque bobinage des moyens électro-dynamiques en se référant à la direction d'allongement de la tige.

Le capteur de vibrations avec sa tige pouvant pivoter autour d'une position neutre où elle est maintenue par des forces de rappel et avec ses éléments de mesure de déplacements, est donc bien adapté à la détermination de mouvements dans un plan perpendiculaire à la tige. L'emploi de moyens magnétiques notamment, pour exercer des forces de rappel de la tige vers sa position neutre, est particulièrement avantageux du fait qu'ils permettent d'éliminer beaucoup de résonances parasites que l'on observe généralement avec des ressorts de rappel.

D'autres caractéristiques et avantages du dispositif selon l'invention apparaîtront mieux à la lecture de la description ci-après de modes de réalisation décrits à titre d'exemples non limitatifs, en se référant aux dessins annexés où :
- la Fig.1 montre schématiquement un premier mode de réalisation du capteur selon l'invention avec une tige pivotante maintenue dans une position neutre par des éléments de suspension magnétiques;
- la Fig.2 montre une variante du premier mode de réalisation où la tige est reliée mécaniquement à son point de pivotement;
- la Fig.3 montre une autre variante du premier mode de réalisation où la première extrémité de la tige est tenue par une rotule;
- la Fig.4 montre un mode d'agencement des bobinages dans le cas où les moyens de détection des mouvements sont du type électro-dynamiques; et
- la Fig. 5 montre des moyens pouvant être utilisés pour détecter les mouvements de l'extrémité libre de la tige pivotante

Le capteur de vibrations selon l'invention comporte un boîtier cylindrique creux dans lequel peut se déplacer une tige rigide allongée 2. Une première extrémité de la tige 2 comporte une partie conique 3. La pointe 4 est en appui sur une face plane supérieure d'une pièce hémisphérique 5. Une première paroi terminale du boîtier 1 comporte en son centre un alésage 7 pour une tige filetée 8. Par vissage, on peut plus ou moins l'enfoncer à l'intérieur du boîtier 1, suivant son axe longitudinal. A son extrémité, du côté de l'intérieur du boîtier 1, la tige filetée 8 est pourvue d'un logement pour un premier aimant 9. La face arrondie opposée de la pièce hémisphérique 5 repose sur l'aimant 9. Dans la partie terminale conique 3 de la tige rigide 2, est ménagé un logement pour un deuxième aimant 10. Cette partie terminale ainsi que la pièce hémisphérique 5 sont réalisées en un matériau ferromagnétique. Les aimants 9 et 10 sont orientés de façon à maintenir plaquée la partie terminale 3 contre son support (5, 8, 9) sans pour autant gêner les oscillations possibles de la tige 2 autour de sa pointe, en réponse aux vibrations appliquées au capteur.

Le capteur comporte aussi des moyens pour exercer sur la tige des forces de rappel capables de la maintenir au repos dans une position neutre. Ces moyens de rappel sont constitués avantageusement par un ensemble de centrage magnétique. Cet ensemble comporte un aimant 11 en forme de bague ou torique disposé à l'intérieur du boîtier 1. La tige rigide 2 comporte une partie amincie 12 traversant le passage central 13 de l'aimant 11. Un autre aimant 14 est fixé à son extrémité opposée à la pointe 4. Les deux aimants 11 et 14 sont disposés de façon à se repousser l'un l'autre si bien que la partie amincie 12 de la tige 2 est maintenue sensiblement centrée dans le passage central 13. Cette force répulsive est bien sûr inférieure à la force attractive maintenant la tige 2 au contact de la pièce hémisphérique 5.

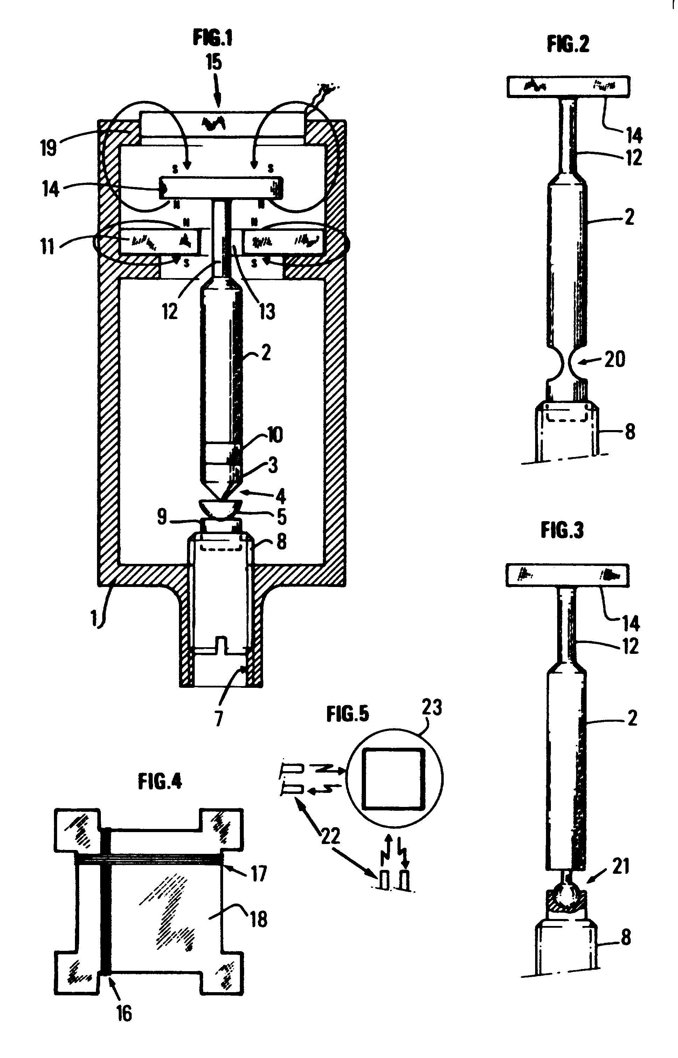

Le capteur comporte également des moyens 15 de détection des mouvements de la partie libre de la tige qui, dans le mode de réalisation de la Fig.1, sont du type électrodynamique par exemple. En face de l'aimant 14, du côté de celui-ci opposé à l'aimant annulaire 11, sont disposés des bobinages 16, 17 agencés de manière à couper les lignes du champ magnétique issu de l'aimant 14. Les bobinages 16, 17 sont enroulés par exemple (Fig.4) autour d'une plaque de support 18 qui est encastrée par exemple dans un évidement d'une paroi terminale 19 du boîtier 1. L'extrémité libre de la tige 2 pouvant se déplacer dans un plan, on utilise de préférence une plaque de support 18 carrée et on enroule dessus les deux bobinages 16, 17 perpendiculairement l'un à l'autre de façon à détecter les mouvements de la tige 2 suivant deux directions orthogonales.

De la masse et la longueur de la tige et de la distance entre les aimants 11 et 14 dépendent les fréquences de résonance du capteur. On choisit une tige 2 de masse relativement faible de façon à minimiser son déplacement statique sous l'effet d'une inclinaison du boîtier 1. La longueur de la tige 2 fait varier ses fréquences propres de vibration qui augmentent quand la longueur diminue. Par un choix approprié de la longueur de la tige puis par un réglage de l'enfoncement de la tige filetée 8 qui peut faire varier l'écartement des deux aimants, on se fixe un mode fondamental de résonance en dehors de la bande de fréquence des vibrations à mesurer.

Suivant la variante de réalisation de la Fig.2, les moyens magnétiques de maintien du point de pivotement de la tige par rapport à la tige filetée 8, peuvent être remplacés par une partie flexible constituée notamment par un amincissement 20 de la tige ou encore par une pièce flexible intercalée.

Suivant la variante de réalisation de la Fig.3, ces mêmes moyens magnétiques peuvent encore être remplacés par une rotule 21.

La disposition des moyens électrodynamiques de détection peut être modifiée sans sortir du cadre de l'invention. On peut par exemple inverser la position respectives de l'aimant d'excitation et des bobinages, ceux-ci étant fixés à l'extrémité libre du bras 2. On peut encore séparer les fonctions de centrage de la tige dans sa position neutre et d'excitation des bobinages des moyens de détection. A cet effet, on utilise par exemple un aimant tel que 14 pour créer les forces d'équilibre et un aimant supplémentaire que l'on fixe à la tige au voisinage immédiat des bobinages 16, 17 pour accroître la sensiblité du capteur.

Les moyens de détection électrodynamiques utilisés dans le mode de réalisation décrit des Fig. 1-3, peuvent encore comporter (Fig. 5) des moyens d'émission-réception optiques ou électromagnétiques 22 d'un type connu. Par ces moyens, on peut mesurer dans ce cas les variations du chemin parcouru par des ondes émises et renvoyées par une plaque 23 fixée à l'extrémité libre 3 de la tige.

On peut encore utiliser des moyens optiques pour mesurer par exemple les variations d'un éclairement reçu d'un émetteur optique consécutivement aux déplacements de l'extrémité libre de la tige.

## Revendications

1. Capteur de vibrations comportant un boîtier (1), une tige rigide (2) pourvue d'une première extrémité (3) en appui sur un support (8) et qui peut pivoter par rapport à lui autour de cette première extrémité, et d'une partie libre, caractérisé en ce qu'il comporte des moyens magnétiques pour exercer des forces de rappel sur la tige (2) et la ramener dans une position neutre par rapport au boîtier (1) et des moyens associés au boîtier (1) et à la tige (2) pour détecter les mouvements dans un plan de la partie libre de la tige relativement au boîtier en réponse à des vibrations appliquées au capteur.

2. Capteur de vibrations selon la revendication 2, caractérisé en ce que lesdits moyens de suspension magnétique comportent un premier aimant (11) pourvu d'un évidement central (13) qui est traversé par la tige (2), celle-ci étant solidaire d'un deuxième aimant (14), les deux aimants (11, 14) étant choisis de façon à exercer l'un sur l'autre des forces répulsives.

3. Capteur de vibrations selon l'une des revendications précédentes, caractérisé en ce qu'il comporte des éléments magnétiques (9, 10) pour maintenir la première extrémité de la tige (3) en appui contre le boîtier (1).

4. Capteur de vibrations selon l'une des revendications 1 à 3, caractérisée en ce qu'il comporte une liaison flexible (20) pour maintenir la première extrémité de la tige au contact avec le boîtier.

5. Capteur de vibrations selon l'une des revendications 1 à 3, caractérisé en ce que la première extrémité de la tige (2) est maintenue par une rotule (21) en contact avec le boîtier (1).

6. Capteur de vibrations selon l'une des revendications précédentes, caractérisé en ce que les moyens de détection (16, 18) sont du type électro-dynamiques et comportent au moins un bobinage (16) en position fixe par rapport au boîtier et coopérant avec ledit deuxième aimant (14).

7. Capteur de vibrations selon l'une des revendications 1 à 5, caractérisé en ce qu'il comporte des moyens de détection de type optique adaptés à mesurer les variations de trajets optiques résultant de des déplacements de la partie libre de la tige rigide.

8. Capteur de vibrations selon l'une des revendications 1 à 5, caractérisé en ce qu'il comporte des moyens de détection de type optique adaptés à mesurer les variations de d'éclairement résultant des déplacements de cette même partie libre.

9. Capteur de vibrations selon la revendication 6, caractérisé en ce que les moyens électro-dynamiques comportent aussi un deuxième bobinage (17) disposé perpendiculairement au premier, les axes des deux bobinages étant dans un plan sensiblement orthogonal à l'axe de la tige (2).

10. Capteur de vibrations selon la revendication 3, caractérisé en ce que les moyens magnétiques comportent un troisième aimant (10) solidaire de la tige et un quatrième aimant (9) solidaire du boîtier, le troisième et le quatrième aimant étant choisis et disposés de manière à exercer l'un sur l'autre une force attractive sensiblement dirigée suivant l'axe de la tige.

11. Capteur de vibrations selon la revendication 3, caractérisé en ce que la liaison flexible pour maintenir la première extrémité de la tige au contact avec le corps comportent un prolongement (20) aminci de la tige.

12. Capteur de vibrations selon la revendication 6 ou 9, caractérisé en ce que chaque bobinage est enroulé autour d'une plaque (18), le boîtier (1) comportant un support (19) pour ladite plaque.

13. Capteur de vibrations selon la revendication 12, caractérisé en ce que ledit deuxième aimant (14) est disposé entre l'emplacement du premier aimant (11) et chaque bobinage des moyens électro-dynamiques (15) en se référant à la direction d'allongement de la tige.

## Patentansprüche

1. Sensor für Schwingungen, umfassend ein Gehäuse (1) und eine steife Stange (2), die mit einem ersten Ende (3) in Abstützung gegen einen Träger (8) versehen ist und die bezogen auf ihn um dieses erste Ende verschwenken kann sowie mit einem freien Teil versehen ist, dadurch gekennzeichnet, daß er magnetische Mittel, um Rückstellkräfte auf die Stange (2) auszuüben und sie in eine neutrale Stellung, bezogen auf das Gehäuse (1), rückzuführen sowie dem Gehäuse (1) und der Stange (2) zugeordnete Mittel umfaßt, um die Bewegungen in einer Ebene des freien Teils der Stange relativ zum Gehäuse in Abhängigkeit von auf den Sensor ausgeübten Schwingungen zu erfassen.

2. Sensor für Schwingungen nach Anspruch 2, dadurch gekennzeichnet, daß diese Mittel zur magnetischen Aufhängung einen ersten Magneten (11) umfassen, der mit einer mittigen Ausnehmung (13) versehen ist, welche von der Stange (2) durchsetzt wird, wobei diese fest bezüglich eines zweiten Magneten (14) ist, wobei die beiden Magnete (11, 14) derart gewählt sind, daß sie aufeinander abstoßende Kräfte ausüben.

3. Sensor für Schwingungen nach einem der vorhergehenden Ansprüche, dadurch gekennzeichnet, daß er magnetische Elemente (9, 10) umfaßt, um das erste Ende der Stange (3) in Abstützung gegen das Gehäuse (1) zu halten.

4. Sensor für Schwingungen nach einem der Ansprüche 1 bis 3, dadurch gekennzeichnet, daß er eine flexible Verbindung (20) umfaßt, um das erste Ende der Stange in Kontakt mit dem Gehäuse zu halten.

5. Sensor für Schwingungen nach einem der Ansprüche 1 bis 3, dadurch gekennzeichnet, daß das erste Ende der Stange (2) durch ein Drehgelenk (21) in Kontakt mit dem Gehäuse (1) gehalten ist.

6. Sensor für Schwingungen nach einem der vorhergehenden Ansprüche, dadurch gekennzeichnet, daß die Detektor- oder Erfassungsmittel (16, 18) vom elektrodynamischen Typ sind und wenigstens eine Wicklung (16) in fester Lage bezogen auf das Gehäuse umfassen und mit diesem zweiten Magneten (14) zusammenwirken.

7. Sensor für Schwingungen nach einem der Ansprüche 1 bis 5, dadurch gekennzeichnet, daß er Erfassungsmittel vom optischen Typ umfaßt, von einer Auslegung derart, daß sie die Veränderungen der optischen Bahnen messen, die aus den Bewegungen des freien Teils der steifen Stange resultieren.

8. Sensor für Schwingungen nach einem der Ansprüche 1 bis 5, dadurch gekennzeichnet, daß er Erfassungsmittel vom optischen Typ einer Auslegung derart umfaßt, daß sie Helligkeitsänderungen messen, die aus den Bewegungen oder Verschiebungen dieses freien Teils resultieren.

9. Sensor für Schwingungen nach Anspruch 6, dadurch gekennzeichnet, daß die elektrodynamischen Mittel auch eine bezüglich der ersten senkrecht angeordnete zweite Wicklung (17) umfassen, wobei die Achsen der beiden Wicklungen in einer Ebene im wesentlichen orthogonal zur Achse der Stange (2) sich befinden.

10. Sensor für Schwingungen nach Anspruch 3, dadurch gekennzeichnet, daß die magnetischen Mittel einen dritten fest bezüglich der Stange angeordneten Magneten (10) und einen vierten fest bezüglich des Gehäuses angeordneten Magneten (9) umfassen, wobei der dritte und der vierte Magnet derart gewählt und angeordnet sind, daß sie aufeinander eine Anziehungskraft ausüben, die im wesentlichen längs der Achse der Stange gerichtet ist.

11. Sensor für Schwingungen nach Anspruch 3, dadurch gekennzeichnet, daß die flexible Verbindung, um das erste Ende der Stange in Kontakt mit dem Körper zu halten, eine sich verjüngende Verlängerung (20) der Stange umfaßt.

12. Sensor für Schwingungen nach einem der Ansprüche 6 oder 9, dadurch gekennzeichnet, daß jede Wicklung um eine Platte (18) gewickelt ist, wobei das Gehäuse (1) einen Träger (19) für diese Platte umfaßt.

13. Sensor für Schwingungen nach Anspruch 12, dadurch gekennzeichnet, daß dieser zweite Magnet (14) zwischen dem Ort des ersten Magneten (11) und jeder Wicklung der elektromagnetischen Mittel (15) bezogen auf die Längsrichtung der Stange angeordnet ist.

## Claims

1. Vibration sensor comprising a casing (1), a rigid rod (2) provided with a first end (3) bearing on a support (8) and which can pivot with respect thereto around this first end, and a free part, characterised in that it has magnetic means for exerting repulsion forces on the rod (2) and returning it to a neutral position with respect to the casing (1) and means associated with the casing (1) and the rod (2) to detect the movements in a plane of the free part of the rod relative to the casing in response to vibrations applied to the sensor.

2. Vibration sensor as claimed in claim 1, characterised in that the said magnetic suspension means comprise a first magnet (11) provided with a central recess (13) through which the rod (2) is passed, the latter being joined to a second magnet (14), the two magnets (11, 14) being selected so that they exert forces of repulsion on each other.

3. Vibration sensor as claimed in one of the previous claims, characterised in that it has magnetic elements (9, 10) to retain the first end of the rod (3) in support against the casing (1).

4. Vibration sensor as claimed in one of claims 1 to 3, characterised in that it has a flexible joint (20) to maintain the first end of the rod in contact with the casing.

5. Vibration sensor as claimed in one of claims 1 to 3, characterised in that the first end of the rod (2) is held in contact with the casing (1) by a ball joint (21).

6. Vibration sensor as claimed in one of the previous claims, characterised in that the detection means (16, 18) are of the of electro-dynamic type and have at least one winding (16) in a fixed position relative to the casing and co-operating with the said second magnet (14).

7. Vibration sensor as claimed in one of claims 1 to 5, characterised in that it has detection means of the optical type adapted to measure variations in the optical paths resulting from displacements of the free part of the rigid rod.

8. Vibration sensor as claimed in one of claims 1 to 5, characterised in that it has detection means of the optical type adapted to measure variations in light resulting from displacements of this same free part.

9. Vibration sensor as claimed in claim 6, characterised in that the electro-dynamic means also have a second winding (17) arranged perpendicularly to the first, the axes of the two windings being in a plane substantially at a right angle to the axis of the rod (2).

10. Vibration sensor as claimed in claim 3, characterised in that the magnetic means have a third magnet (10) joined to the rod and a fourth magnet (9) joined to the casing, the third and fourth magnets being selected and arranged in such a way as to exert on each other a force of attraction directed essentially along the axis of the rod.

11. Vibration sensor as claimed in claim 3, characterised in that the flexible joint for maintaining the first end of the rod in contact with the body has a narrowed extension (20) of the rod.

12. Vibration sensor as claimed in claim 6 or 9, characterised in that each winding is wound around a plate (18), the casing (1) having a support (19) for the said plate.

13. Vibration sensor as claimed in claim 12, characterised in that the said second magnet (14) is arranged between the location of the first magnet (11) and each winding of the electro-dynamic means (15) with reference to the direction in which the rod extends.
